# EUROPEAN PATENT APPLICATION

(11) **EP 3 883 156 A1**
(43) Date of publication of application: **22.09.2021**
(21) Application number: 21163540.4
(22) Date of filing: 18.03.2021
(51) Int. Cl.: H04J 14/02

(54) **SYSTEM AND METHOD FOR ENABLING DYNAMIC BANDWIDTH CONTROL IN PASSIVE OPTICAL NETWORK INFRASTRUCTURE**

(30) Priority: 18.03.2020 IN 202011011593
(71) Applicant: Sterlite Technologies Limited, Haryana 122002 (IN)
(72) Inventor: THOLLABANDI, Madhan, 122002 Gurgaon (IN); CHOUBEY, Anurag, 122002 Gurgaon (IN); CHATTOPADHYAY, Saurabh, 122002 Gurgaon (IN)
(74) Representative: Hepworth Browne

(57) **Abstract**

A system and a method of dynamic bandwidth allocation in the passive optical network comprising a SDN controller (112) to switch a first subscriber of the subscriber group (102) from a first passive optical network (PON) port to a second PON port at the OLT (116) when a first bandwidth availability at the first PON port is less than a predefined bandwidth and a second bandwidth availability at the second PON port is more than the predefined bandwidth. In particular, the predefined bandwidth is a required bandwidth by the first subscriber.

## Description

### TECHNICAL FIELD

Embodiments of the present disclosure relate to the field of networking infrastructure, and in particular, relates to a system and method for enabling dynamic bandwidth control in a passive optical network infrastructure.

The present application claims the benefit of Indian Application No. 202011011593 titled "System And Method For Enabling Dynamic Bandwidth Control In Passive Optical Network Infrastructure" filed by the applicant on 18/03/ 2020, which is incorporated herein by reference in its entirety.

### Background Art

Over the last few decades, network infrastructure has flourished at a very rapid pace. The network infrastructure plays a significant role in the development of any country. In addition, the network infrastructure includes hardware and software resources that enable network connectivity, communication, operations and management of an enterprise network.

In general, the PON is a telecommunications technology used to provide optical fibre to the end consumer, both domestic and commercial. The passive optical network (PON) may comprise an optical fiber network for transmitting data between a single transmission point and a plurality of end users.

Further, passive optical network (PON) forms an essential part of the network infrastructure providing network access to end customers. And, the PON includes an optical line terminal (OLT) at central office, optical network units (ONUs) at premises of end customers, and optical distribution network (ODN) connecting the OLT and the ONUs.

In recent years, gigabit passive optical network (GPON) using time division multiplexing (TDM) are deployed widely for residential customers while wavelength division multiplexing (WDM) PONs are deployed in those premises which have high bandwidth hungry applications .

The capacity of GPON port is limited to 2.5 gigabits per second and 1.25 gigabits per second in downstream and upstream directions, respectively due to hardware constraint while the XGSPON, also called as 10G symmetric PON is being seen as a commercial viable solution for high capacity PON applications. Further, the PON requires dynamic bandwidth management solutions.

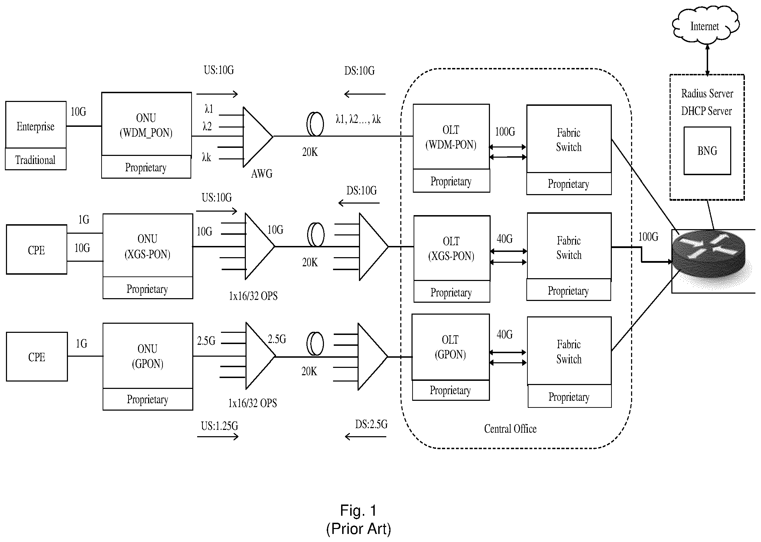

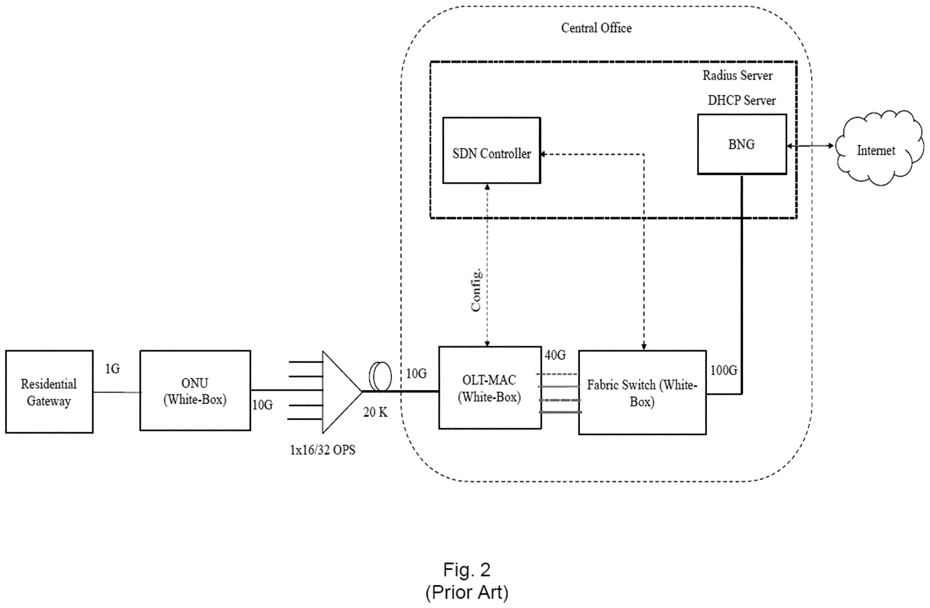

Hereinafter, related art for Passive optical network (PON) architecture will be described with reference to Fig. 1 and Fig. 2 in order to facilitate an understanding of the inventive concept.

FIG. 1 shows a traditional PON architecture in accordance with a disclosed prior art. The traditional PON architecture have multiple subscriber groups (enterprise, customer premise equipment (CPE)) connected to individual proprietary ONUs and hardwired to proprietary OLTs, connected with switches. Drawbacks are that the architecture uses proprietary components and the software stack of the proprietary components is not open to operators. Hardwiring of OLT PON ports with subscriber groups results in inefficient use of PON port capacities.

FIG. 2 shows another example of the traditional PON architecture in accordance with a disclosed prior art. It uses open white box components such as Open ONUs, Open OLTs and is connected with a SDN controller. The SDN controller configures the OLTs, the ONUs and any other white box switches attached to the controller. The software stack of the SDN controller can run on any general purpose x86 server. The optical layer in this architecture, which connects subscribers ("Residential Gateway") with OLTs through ONUs, uses hardwired connections. The optical layer is not programmable which does not allow scaling of upstream bandwidth for subscribers beyond hardwired PON port capabilities or speed. Drawback of the system is that it does not allow optimum usage of PON ports at OLTs. Hardwiring of the PON port with subscribers does not allow sharing of PON ports of OLTs by the subscriber groups.

Conventionally, a single ONT (Optical Network Terminal) is allowed to transmit data at a given point in time in a shared upstream channel. A bandwidth allocation technique determines a start time and length of a transmission time slot for each ONT. Further, statistical multiplexing of network traffic in access networks can be exploited using a Dynamic Bandwidth Algorithm (DBA). The DBA process contains three important steps as follows: calculation of bandwidth demand for the T-CONTs (logical queue at the ONT associated with specific QoS requirements) based on a segment routing (SR) or traffic monitoring (TM) information, assignment of bandwidth based on service and fair-share policies and scheduling of the upstream traffic through the construction of upstream bandwidth maps. In the DBA, the following are the limitation (i.e., due to hardware constraint, the PON port capacity is limited to 1.25G and 10G for GPON and XGSPON, and upstream bandwidth of subscribers beyond certain bandwidth (1.25G/10G) is not possible due to the hardware constraint.

There is an urgent need for a technical solution that overcomes the above stated limitations in the prior arts such as the PON fall short of addressing above hardware constraints and limiting the accessible bandwidth/subscriber to port speeds of PON port interface in upstream direction.

### SUMMARY OF THE INVENTION

Embodiments of the present disclosure provide a method and a system for handling dynamic bandwidth allocation in a passive optical network infrastructure by dynamic allocation of PON ports based on a logical grouping of PON ports. When a subscriber group among a plurality of subscriber groups associated with at least one PON port requires a bandwidth upgrade in excess of PON port capacity, the excess traffic originating from the subscriber group is shifted from a first wavelength to a second wavelength associated with a second PON port in an optical line terminal (OLT). The excess traffic is shifted by wavelength tuning at the ONU and wavelength selective switch (WSS) at the OLT. This results in providing a dynamic quality of service (QoS) passive optical network infrastructure.

According to a first aspect, the method for handling dynamic bandwidth allocation in a passive optical network infrastructure is provided.The method includes steps of receiving a request to adjust a bandwidth from a first subscriber and sending the request to a software-defined network controller to adjust a bandwidth profile of the first subscriber, determining a bandwidth usage of each of a PON portat an optical line terminal (OLT) and a QoS of other subscribers among the subscriber group and switching the first subscriber from a first PON port to a second PON port at the OLT. In particular, the software-defined network controller switches the first subscriber from the first passive optical network (PON) port to second PON port at an optical line terminal (OLT) when the first bandwidth availability at the first PON port is less than a predefined bandwidth.

In accordance with an embodiment of the present disclosure, the predefined bandwidth is allocated to the first subscriber, by the second PON port, when the first bandwidth availability at the first PON port is less than the predefined bandwidth, required by the first subscriber. In particular, the first bandwidth availability at the first PON port is less than the predefined bandwidth and the second bandwidth availability at the second PON port is more than the predefined bandwidth. The predefined bandwidth is a required bandwidth by the first subscriber.

In accordance with an embodiment of the present disclosure, the method further comprising steps of checking a bandwidth availability at a plurality of PON ports associated with the OLT, selecting a sub-plurality of PON ports where bandwidth availability is more than the predefined bandwidth and selecting the second PON port from the sub-plurality of PON ports for switching the first subscriber from the first PON port to the second PON port.

In accordance with an embodiment of the present disclosure, the method further comprising a step of allocating the predefined bandwidth to the first subscriber, by the second PON port, when the first bandwidth availability at the first PON port is less than the predefined bandwidth, and a second bandwidth availability at the second PON port is more than the predefined bandwidth. Particularly, the allocation of the predefined bandwidth further comprising allocating a portion of the second bandwidth availability to the first subscriber.

In accordance with an embodiment of the present disclosure, switching of the first subscriber from the first PON port to the second PON port at the optical line terminal (OLT) further comprising changing a first wavelength of upstream carrier of the first subscriber to a second wavelength at an optical network unit (ONU) associated with the first subscriber. In particular, the second wavelength is associated with the second PON port.

Further, the method provides a seamless movement of subscribers on the optical network unit between PON ports of optical line terminal (OLT) and supports dynamic 1:N Type-B protection of ONU/Ts connected to the PON port, where a single PON port is reserved for Type-B protection of 'N' active PON ports.

In the proposed method, the optical layer slicing supports multi-tenant sharing of the same physical access network infrastructure. In particular, the method is configured to decouple the subscribers (ONU/Ts) connected to the PON port and seamlessly switch subscribers (ONU/Ts) between PON ports and enables network providers to support multi tenancy (multiple service providers share same optical access network) by optical layer slicing.

According to a second aspect, a method for switching the first subscriber from the first PON port to the second PON port at the optical line terminal (OLT) is provided. In particular, the switching includes hanging a first wavelength of upstream carrier of the first subscriber to a second wavelength at an optical network unit (ONU) associated with the first subscriber, tuning a filter wavelength of an output port of a wavelength selective switch (114) catering to the OLT, in accordance to the changed first wavelength of upstream carrier of the first subscriber, at the ONU and switching the first subscriber associated with the first PON port to the second PON port, in response to tuning the filter wavelength of the output port of the wavelength selective switch.

In accordance with an embodiment of the present disclosure, switching of subscribers associated with at least one PON port on the optical line terminal to another available PON port is based on the SDN controller decision.

In accordance with an embodiment of the present disclosure, the wavelength of the upstream carrier is in the range of 1270 nm to 1330 nm, in the case of XGSPON and GPON, respectively.

In accordance with an embodiment of the present disclosure, the filter bandwidth is in the range of 1 GHz to 10 GHz to 100 GHz.

In accordance with an embodiment of the present disclosure, the subscribers requests for bandwidth adjustment or scaling of bandwidth associated with the at least one PON port on the optical line terminal are switched to another available PON port through tuning of upstream wavelength bandwidth without physically disconnecting the at least one PON port associated with other subscribers.

According to a third aspect, a passive optical network for handling dynamic bandwidth allocation is provided. In particular, the passive optical network includes one or more programmable wavelength selective switch connected with an optical line terminal, an SDN controller controlling configuration of the one or more programmable wavelength selective switch, and one or more optical network units (ONUs) connected with the optical line terminal via the one or more programmable wavelength selective switch.

According to the fourth aspect of the disclosure, the SDN controller is provided with a dynamic bandwidth management system. In particular, the dynamic bandwidth management system is configured to receive a request to adjust a bandwidth from at least one subscriber among a plurality of groups and send the request to the SDN controller to adjust a bandwidth profile of at least one subscriber among the plurality of groups. Moreover, the dynamic bandwidth management system is configured to determine a bandwidth usage of each of a PON port at the optical line terminal and a QoS of other subscribers among the plurality of groups. Further, the dynamic bandwidth management system is configured to switch other subscribers associated with at least one PON port on the optical line terminal to another available PON port based on the determination.

According to the fourth aspect of the disclosure, a system for enabling dynamic bandwidth control in a passive optical network infrastructure is provided. In particular, the system for dynamic bandwidth allocation includes a subscriber group , an optical network unit (ONU), a software-defined network (SDN) controller and an optical line terminal (OLT).

In accordance with an embodiment of the present disclosure, the SDN controller is operbly configured to switch a first subscriber of the subscriber group from a first passive optical network (PON) port to a second PON port at the OLT. In particular, the SDN controller switches to the second PON port when a first bandwidth availability at the first PON port is less than a predefined bandwidth and a second bandwidth availability at the second PON port is more than the predefined bandwidth.

In accordance with an embodiment of the present disclosure, the SDN controller further receives a request from the first subscriber to allocate the predefined bandwidth. In particular, the predefined bandwidth is bandwidth required by the first subscriber.

In accordance with an embodiment of the present disclosure, the SDN controller is configured to allocate the predefined bandwidth to the first subscriber. In particular, the predefined bandwidth is allocated to the first subscriber by the second PON port when the first bandwidth availability at the first PON port is less than the predefined bandwidth required by the first subscriber.

In accordance with an embodiment of the present disclosure, the SDN controller is operably configured to check the bandwidth availability at a plurality of PON ports associated with the OLT, and select a sub-plurality of PON ports where bandwidth availability is more than the predefined bandwidth. Further, the SDN controller selects the second PON port from the sub-plurality of PON ports for switching the first subscriber from the first PON port to the second PON port.

In accordance with an embodiment of the present disclosure, the SDN controller further allocates the predefined bandwidth to the first subscriber, by the second PON port, when the first bandwidth availability at the first PON port is less than the predefined bandwidth, and a second bandwidth availability at the second PON port is more than the predefined bandwidth. In particular, the allocation of the predefined bandwidth further comprises allocating a portion of the second bandwidth availability to the first subscriber.

In accordance with an embodiment of the present disclosure, the SDN controller is configured to switch the first subscriber from the first PON port to the second PON port at the OLT by changing the first wavelength of upstream carrier of the first subscriber to a second wavelength at the ONU associated with the first subscriber. In particular, the second wavelength is associated with the second PON port.

In accordance with an embodiment of the present disclosure, the SDN controller is configured to switch the first subscriber from the first PON port to the second PON port at the OLT. In particular, the system is conf change a first wavelength of upstream carrier of the first subscriber to a second wavelength at the ONU associated with the first subscriber, wherein the second wavelength is associated with the second PON port; tune a filter wavelength of an output port of a wavelength selective switch catering to the OLT, in accordance to the changed first wavelength of upstream carrier of the first subscriber, at the ONU and switch the first subscriber associated with the first PON port to the second PON port, in response to tuning the filter wavelength of the output port of the wavelength selective switch .

In an aspect of the present disclosure, the system enables dynamic and isolated re-use of capacity allocation of passive optical network infrastructure.

In another aspect of the present disclosure, the system to increase scale and capacity of passive optical network infrastructure without duplication of hardware resources.

In yet another aspect of the present disclosure, the system is configured to support multi-tenancy.

In yet another aspect of the present disclosure, the system is configured to support 1:N Type-B passive optical network port protection

In yet another aspect of the present disclosure, the system is configured to provide dynamic scaling of upstream bandwidth.

In yet another aspect of the present disclosure, the system is configured to scale the upstream bandwidth beyond PON port speed.

According to the foregoing solutions, the SDN controller is operably configured to switch a first subscriber of the subscriber group from a first passive optical network (PON) port to a second PON port at the OLT when a first bandwidth availability at the first PON port is less than a predefined bandwidth and a second bandwidth availability at the second PON port is more than the predefined bandwidth, wherein the predefined bandwidth is a required bandwidth by the first subscriber. In this way, the first subscriber is switched from the first PON port to the second PON port efficiently.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 illustrates a conventional GPON/XGSPON Passive optical network (PON) architecture in accordance with a disclosed prior art;
Fig. 2 illustrates a conventional Passive optical network (PON) architecture with open white box components in accordance with another disclosed prior art;
Fig. 3 is a block diagram illustrating an interactive computing environment for enabling dynamic bandwidth control in a passive optical network (PON) architecture in accordance with an embodiment of the present disclosure;
Fig. 4 is a block diagram illustrating a passive optical network (PON) architecture for dynamic bandwidth allocation in accordance with one embodiment of the present disclosure;
Fig. 5 is a block diagram illustrating the passive optical network (PON) architecture for dynamic bandwidth allocation in accordance with alternate embodiment of the present disclosure;
Fig. 6 is a block diagram illustrating the passive optical network (PON) architecture for dynamic bandwidth allocation in accordance with yet alternate embodiment of the present disclosure;
Fig. 7 is a block diagram illustrating the passive optical network (PON) architecture for dynamic bandwidth allocation in accordance with yet alternate embodiment of the present disclosure;
Fig. 8 is a schematic diagram illustrating a computing device in accordance with an embodiment of the present disclosure
Fig. 9 is a flowchart illustrating a method for enabling dynamic bandwidth control in the passive optical network in accordance with an embodiment of the present disclosure.

### REFERENCE LIST

System 100
Subscriber Group 102
Optical Network Unit 104
Tunable Optical Transceiver 106
Optical Power Splitter 108
Central Office 110
Software-defined Network (Sdn) Controller 112
Wavelength Selective Switch (Wss) 114
Optical Line Terminal 116
Fabric Switch 118
Dynamic Bandwidth Management System 120
Computing Device 1000
Bus 1002
Memory 1004
One Or More Processors 1006
One Or More Presentation Components 1008
One Or More Input/Output (I/O) Ports 1010
One Or More Input/Output Components 1012
Power Supply- 1014

The method and system are illustrated in the accompanying drawings, throughout which like reference letters indicate corresponding parts in the various figures.

It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". [0052] Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

Following terms shall apply throughout the present disclosure:
"WAN" refers to a larger computer network that is operated by Internet service providers.
"Bandwidth" refers to the maximum rate of data transfer and bandwidth may be characterized as network bandwidth, data bandwidth, or digital bandwidth.
"OMCI" is a protocol for information exchange defined in the GPON standard. The OMCI supports configuration management, fault management, performance management, and security management.
"Optical line terminal" refers to an equipment integrating L2/L3 switch function in the passive optical network.

The term FTTx stands for Fibre-to-the-x or Fibre-to-the-loop. the FTTx is a term used for any broadband network architecture using optical fibre to provide all or part of the local loop used for last mile telecommunications. In addition, the optical fibre is a thin fibre of glass or plastic that can carry light from one end to the other. Further, the optical fibre is mainly used in telecommunications and networking. Furthermore, the optical fibre is used for lighting, sensors, toys, and special cameras for seeing inside small spaces.

In general, the FTTx is used for various configurations of fibre deployment. And, the various configurations of fibre deployment includes a first configuration and a second configuration.The first configuration includes but may not be limited to a FTTP, a FTTH and a FTTB. The FTTP stands for Fibre to the Premises. The FTTH stands for Fibre to the Home. The FTTB stands for Fibre to the Building. The second configuration includes but may not be limited to a FTTC and a FTTN. The FTTC stands for Fibre to the Cabinet. The FTTN stands for Fibre to the Node. However, the various configurations of fibre deployment are not limited to above mentioned configurations.

The passive optical network (PON) may comprise an optical fiber network for transmitting data between a single transmission point and a plurality of end users. The dynamic bandwidth control allows allocation of traffic bandwidth in a shared telecommunications medium on demand of users. In particular, dynamic bandwidth control is a form of bandwidth management. Further, the dynamic bandwidth control adapts to instantaneous traffic demands of the users. Furthermore, the dynamic bandwidth control enables seamless switching of the users because typically all users are not connected to the network at one time.

In general, the PON is a telecommunications technology used to provide optical fibre to the end consumer, both domestic and commercial. In addition, the optical line terminal performs conversion between electrical signals used by service provider's equipment and fibre optic signals used by the PON. Further, the optical line terminal coordinates multiplexing between conversion devices on another end of the network. The conversion devices include but may not be limited to optical network terminals (ONTs) and optical network units (ONUs).

An interactive computing environment for enabling dynamic bandwidth control in passive optical networks are described in the embodiments of the present disclosure are used to describe the technical solutions in the embodiments of the present disclosure more clearly, but are not intended to limit the technical solutions provided in the embodiments of the present disclosure. A person of ordinary skill in the art may learn that, with evolution of the interactive computing environment and emergence of a new service scenario, the technical solutions provided in the embodiments of the present disclosure are also applicable to a similar technical problem.

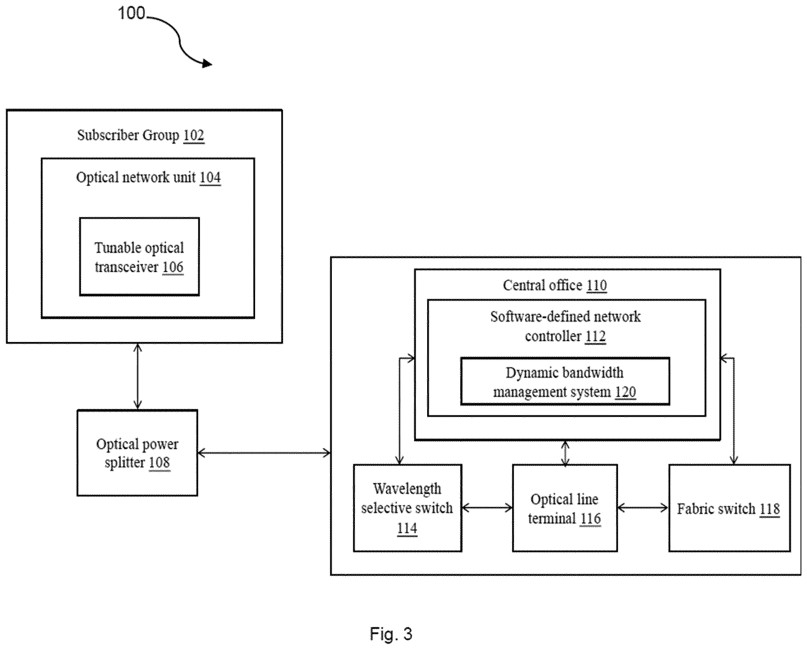

As shown in FIG. 3, an interactive computing environment (hereinafter referred as system 100) enables dynamic bandwidth control in a passive optical network (PON) architecture. The computing environment can include any type of computer system, including, but not limited to, a computer system based on a microprocessor, a mainframe computer, a digital signal processor, a portable computing device, a device controller, or a computational engine within an appliance, to name a few.

The system 100 includes a subscriber group 102, an optical network unit 104, a tunable optical transceiver 106, and an optical power splitter 108, a central office 110, a software-defined network (SDN) controller 112, a wavelength selective switch (WSS) 114, an optical line terminal 116, and a fabric switch 118. In particular, the system 100 is configured to provide a programmable optical layer in the FTTx network infrastructure for the subscriber group 102.

In accordance with an embodiment, the subscriber group 102 may include, but not be limited to, residential, enterprises, wireless mobile base station, and Multinational Corporations.

In accordance with alternative embodiment, the subscriber group 102 may include a plurality of users. In particular, the plurality of users include users in a business, users in building, users in home, users in a premise, and the like. Moreover, each of the plurality of users may be any person or individual accessing and/or corresponding to a communication device of one or more communication devices. Further, the users are connected within the system 100 through one or more communication devices.

In one aspect of the present disclosure, the user is an owner of one or more communication devices.

In another aspect of the present disclosure, the user is not the owner of the one or more communication devices.

In accordance with alternative embodiment of the present disclosure, the users may access the one or more communication devices in the subscriber group 102.

In an aspect of the present disclosure, the user may access one or more communication devices at home.

In another aspect of the present disclosure, the user may access one or more communication devices at a cafe or at any public place.

In yet another aspect of the present disclosure, the user may access one or more communication devices at office.

In an exemplary example, user U1 accesses a smartphone S1 while sitting in a living room, user U2 accesses a laptop L2 while travelling from one place to another and user U3 accesses a desktop computer D3 while working at office.

In accordance with an embodiment, one or more communication devices may be a portable communication device. Moreover, the portable communication device include but may not be limited to a mobile phone, a tablet, a smartphone, a cellular telephone, an enhanced general packet radio service (EGPRS) mobile phone, laptop computer, a tablet computer, a personal digital assistant (PDA), a communication network appliance, a camera, a smartphone, a media player, a navigation device, an email device, a game console, Palmtop PDA, a pocket PC, a smartwatch,a virtual reality device, a internet of things device, a Bluetooth headset or a combination of any these devices.

In an aspect of the present disclosure, the smart mobile device may be an iOS smartphone or an Android smartphone or a Windows smartphone or a smartphone based on another technology (known to be developed in future).

In accordance with an alternative embodiment, one or more communication devices may be a fixed communication device. In particular, the fixed communication device includes but may not be limited to desktop, workstation, smart TV and mainframe computer.

In accordance with an embodiment of the present disclosure, the subscriber group 102 further includes an optical network unit 104 and a residential gateway. In particular, the optical network unit 104 is operably configured to convert the optical signals transmitted through the optical fibre into electrical signals and send the electrical signals to the subscriber of the subscriber group 102. Moreover, the optical network unit 104 sends, aggregates and grooms data coming from the subscriber group 102.

In accordance with another alternative embodiment of the present disclosure, the optical network unit 104 is configured to send data upstream to the optical line terminal 116. In particular, the optical network unit 104 optimises and reorganises the data stream coming from the plurality of users. In particular, the optical line terminal 116 supports bandwidth allocation for a smooth data flow to the optical network unit 104.

In accordance with yet alternate embodiment of the present disclosure, the optical network unit 104 is connected through various units. In particular, various units include but may not be limited to twisted-pair copper wire, coaxial cable, single optical fibre or multi-mode optical fibre.

Particularly, the residential gateway is a consumer-grade router providing network access between local area network (LAN) hosts to wide area network (WAN) through a modem. Modem is integrated with hardware of the residential gateway.

In accordance with an embodiment, the residential gateway includes but may not be limited to Cable modem, DSL modem, Wireless router, Network switch, and IP-DECT telephone (base station).

In accordance with alternate embodiment of the present disclosure, the residential gateway includes but may not be limited to Voice over internet protocol (VoIP) analog telephone adapter. Wireless access point, and Wired router.

In accordance with alternate embodiment of the present disclosure, the dynamic bandwidth management system 120 misconfigured with a programmable optical layer to dynamically allocate bandwidth and to enable scaling of upstream bandwidth in the passive optical network (PON). The dynamic bandwidth management system 120 may be a Device Subscriber Management (DSM) component. In particular, the dynamic bandwidth management system 120 delivers dynamic QoS. Moreover, the dynamic bandwidth management system 120 scales the bandwidth capacity in the passive optical network (PON). Further, the dynamic bandwidth management system 120 supports 1:N Type-B passive optical network port protection.

In an exemplary case of 1:1 Type-B protection, for every passive optical network (PON) port there is another dedicated passive optical network (PON) port on OLT reserved as backup to overcome passive optical network (PON) port failure. But in the case of 1:N Type B protection, only one passive optical network (PON) port is reserved as backup for 'N' active passive optical network (PON) ports of OLT. With the incorporation of WSS at the central office, the current architecture offers flexibility to switch traffic from any passive optical network (PON) port of OLT to any passive optical network (PON) port reserved for failure protection. The current architecture can also distribute the load of the failed PON port over the other active passive optical network (PON) ports of OLT. The system achieves the type-B passive optical network (PON) port protection without the need for additional fiber protection/standby link in the passive optical network (PON) system.

The dynamic bandwidth allocation in the passive optical network (PON) may be the allocation of bandwidth from the passive optical network (PON) to the plurality of end users based on end user requirements. The end user requirements may comprise at least one request from at least one subscriber for the bandwidth to facilitate at least one application. In particular, the dynamic bandwidth allocation may be performed by checking of a bandwidth usage availability at a plurality of passive optical network (PON) ports at an optical line terminal (OLT). Moreover, the plurality of passive optical network (PON) ports may be one or more interfaces at the optical line terminal for handling communication between at least one subscriber and the optical line terminal in the passive optical network (PON).

In accordance with an embodiment of the present disclosure, the dynamic bandwidth management system 120 receives a request from a first subscriber of the subscriber group 102 for a predefined bandwidth allocation. In particular, the first subscriber may be a single subscriber or a group of subscribers connected to the optical network unit (ONU) 104 and the optical network unit (ONU) 104 is further connected to the optical line terminal (OLT) 116 at the central office 110. The first subscriber may be at least one subscriber, corresponding to the subscriber group. The first subscriber may be a first subscriber group, the first subscriber group may be having a plurality of subscribers.

For example, a plurality of subscribers in a particular zone or building may be considered as the first subscriber. Similarly, a single subscriber may be termed as the first subscriber.

In accordance with one or more embodiments of the present disclosure, the group may be any residential end-subscriber and/or any enterprise end-subscriber and/or any wireless mobile base station and/or any suitable end-subscriber.

In accordance with an embodiment of the present disclosure, the dynamic bandwidth management system 120 is further configured to send the request received from the first subscriber to the SDN controller 112. The dynamic bandwidth management system 120 allows the SDN controller 112 to analyse bandwidth consumption and the quality of service (QoS) of other subscribers. In particular, the SDN controller 112 may determine a bandwidth consumption and a quality of service (QoS) of other subscribers in the subscriber group from a plurality of subscriber groups. Further, the SDN controller 112 may decide, if the request to adjust bandwidth from the subscriber is to be processed for allocation based on at least one parameter. And, at least one parameter includes but not limited to subscription of the first subscriber, determination of bandwidth consumption and the QoS requirements of the other subscribers in the subscriber group.

In accordance with an embodiment of the present disclosure, the SDN controller 112 is operably configured to receive the request from the first subscriber for the predefined bandwidth to facilitate a service. Upon receiving the request for bandwidth, the SDN controller 112 checks bandwidth availability at the plurality of PON ports associated with the OLT and selects a sub-plurality of passive optical network (PON) ports where the bandwidth availability is more than the predefined bandwidth. Further, the SDN controller 112 selects a second passive optical network (PON) port from the plurality of passive optical network (PON) ports for switching the first subscriber from a first passive optical network (PON) port to the second passive optical network (PON) port. Accordingly, the SDN controller 112 performs allocation of bandwidth using available bandwidth corresponding to the plurality of passive optical network (PON) ports of the OLT 116.

The plurality of passive optical network (PON) ports at the OLT 116 may be used by the first subscriber using logical binding of the plurality of PON ports with the first subscriber. This may further mean that there may be no hard wiring of a PON port with the first subscriber.

In accordance with an embodiment of the present disclosure, the SDN controller 112 allocates the predefined bandwidth to the first subscriber by the second passive optical network (PON) port, when a first bandwidth availability at the first passive optical network (PON) port is less than the predefined bandwidth and a second bandwidth availability at the second passive optical network (PON) port is more than the predefined bandwidth.

In an implementation, a portion of the second bandwidth availability is allocated to the first subscriber.

In an embodiment, the predefined bandwidth required by the first subscriber is allocated by the second passive optical network (PON) port, if there may be no sufficient available bandwidth at the first passive optical network (PON) port, which is connected to the first subscriber (first subscriber group). In this case, the allocation of bandwidth may be performed by the second passive optical network (PON) port instead of the first passive optical network (PON) port. And, there may be a possibility that the allocation of bandwidth to the first subscriber may be performed by the first passive optical network (PON) port and the second passive optical network (PON) port.

In an exemplary example, if the first subscriber requires an additional 3 times bandwidth than regular requirements, there may be a possibility that 2x bandwidth is allocated by the first PON port and 1x bandwidth is allocated by the second PON port, if the bandwidth is available at the respective PON ports.

In alternate embodiment of the present disclosure, more than 2 passive optical network (PON) ports may be used concurrently by the first subscriber if the required bandwidth is not available at the first and second passive optical network (PON) port. In particular, the plurality of passive optical network (PON) ports may dynamically provide allocation of bandwidth to the first subscriber based on the bandwidth requirement by the first subscriber and the available bandwidth at the plurality of passive optical network (PON) ports.

In yet alternate embodiment of the present disclosure, only a portion of available bandwidth from the plurality of passive optical network (PON) ports is allocated to the first subscriber by the plurality of passive optical network (PON) ports.

In an exemplary example, if the first subscriber requires 3x bandwidth and there are 3 available passive optical network (PON) ports having 4x available bandwidth at each of the plurality of passive optical network (PON) ports, then each of the plurality of passive optical network (PON) ports may allocate 1x bandwidth (only a portion of total available bandwidth) to the first subscriber, thereby fulfilling the bandwidth requirement.

In particular, the allocation is done by the SDN controller 112 to manage the bandwidth allocation of available bandwidth in each of the plurality of passive optical network (PON) ports efficiently.

In an embodiment, the SDN controller 112 may utilize specific passive optical network (PON) ports at the OLT 116 for fulfilling the allocation requirement based on quality or frequency of bandwidth at the plurality of passive optical network (PON) ports, required by the first subscriber.

In accordance with an embodiment of the present disclosure, the first subscriber may dynamically request a bandwidth in a particular frequency band. In particular, the request may be processed by the SDN controller 112 followed by allocation of bandwidth by the plurality of passive optical network (PON) ports by increasing, decreasing or modifying the allocated bandwidth quality.

In accordance with an embodiment of the present disclosure, the dynamic bandwidth management system 120 or the SDN controller 112 switches the first subscriber from the first passive optical network (PON) port to the second passive optical network (PON) port at the optical line terminal (OLT) 116 through tuning of wavelength of upstream carrier and adjusting bandwidth of wavelength selective optical switch. In particular, the request to adjust bandwidth corresponds to adjustment of the upstream carrier wavelength. And, the switching occurs when the first bandwidth availability at the first passive optical network (PON) port is less than the predefined bandwidth and the second bandwidth availability at the second passive optical network (PON) port is more than the predefined bandwidth. Further, the predefined bandwidth is the required bandwidth by the first subscriber.

In accordance with an embodiment of the present disclosure, the first subscriber may be at least one of the subscribers in the subscriber group 102, which may be switched to the second passive optical network (PON) port upon lack of bandwidth availability at the first passive optical network (PON) port. Particularly, the plurality of PON ports may be used dynamically by a single subscriber group.

For example, if a subscriber group have 100 subscribers connected to the first PON port and there is sudden increase of the bandwidth requirement by the subscriber group, which may not be fulfilled by the first PON port, then a few of the subscribers from the subscriber group are switched to another PON port dynamically for fulfilling the bandwidth requirement. Similarly, if the bandwidth requirement by the remaining subscribers is not fulfilled by the second PON port, due to high bandwidth requirement, then a third PON port may be utilized in a similar way, for switching second remaining subscribers to the third PON port, having sufficient available bandwidth to fulfil the bandwidth requirements of the second remaining subscribers. The second remaining subscribers may be the count of subscribers in the subscriber group which may not be catered by the first and second PON ports due to lack of available bandwidth.

In accordance with an embodiment of the present disclosure, the switching is performed by checking the count of subscribers that may be catered by the first PON port, as per its bandwidth availability, and switching the remaining subscriber to the second PON port, which has sufficient available bandwidth to cater to the bandwidth requirements of the remaining subscribers.

In accordance with alternate embodiment of the present disclosure, the switching of the first subscriber from the first PON port to the second PON at the optical line terminal (OLT) 116 is performed by dynamically tuning or changing the upstream carrier wavelength of the first subscriber from a first wavelength to a second wavelength. In particular, the second wavelength corresponds to the second PON port, to which the switching of the first subscriber may be performed.

Similarly, once the upstream carrier wavelength for the first subscriber is changed from the first wavelength to the second wavelength, the output port of the wavelength selective switch (WSS) 114 changes to the corresponding to the second wavelength. The wavelength selective switch (WSS) 114 may be connected to the optical network unit (ONU) 104 of the first subscriber via a passive optical network layer and to the optical line terminal (OLT) 116. In particular, changing of the WSS output port wavelength corresponding to the second wavelength allows the first subscriber to be moved or tuned to the second PON port, thereby dynamically switching the first subscriber from the first PON port (corresponding to the first wavelength) to the second PON port (corresponding to the second wavelength).

In accordance with alternate embodiment of the present disclosure, switching the first subscribers associated with the first PON port on the optical line terminal (OLT) 116 to another available PON port i.e. the second PON port based on the determination includes tuning the wavelength of upstream carrier of the first subscriber to another wavelength. Particularly, the another wavelength is associated with the second PON port and logically grouped with a current PON port, adjusting a filter wavelength of the output port of the wavelength selective switch based on the tuned wavelength at the optical line terminal (OLT) 116 and switching the first subscriber associated with the first PON port on the optical line terminal to the second PON port in response to adjusting the filter wavelength of the output port of the wavelength selective switch.

In accordance with an embodiment of the present disclosure, tunable optical transceiver 106 is proposed for the optical network unit 104. The tunable optical transceiver 106 is programmable by the SDN controller 112 via the optical line terminal 116 through an ONU Management Control Interface of the dynamic bandwidth management system. In particular, the tunable optical transceiver 106 may tune upstream optical carriers to wavelength in a range of 1290 nanometre to 1330 nanometre.

In an alternate embodiment of the present disclosure, the tunable optical transceiver 106 may tune upstream optical carriers to wavelength in a range of 1260 nanometre to 1280 nanometre. In particular, the tunable optical transceivers are fixed transceivers with capability to set channels of emitting lasers. Moreover, the tunable optical transceivers reduce the number devices operating at fixed wavelengths installed within the network. Further, the tunable optical transceivers 106 are available in a DWDM (Dense Wavelength Division Multiplexer) channel spacing or sub-DWDM channel spacing. Furthermore, the tunable optical transceivers are designed for Original Band.

In alternate embodiment of the present disclosure, the tunable optical transceivers may support more than or equal to 88 channels that are set with 0.4 nanometre intervals.

In accordance with yet alternate embodiment of the present disclosure, the tunable optical transceiver 106 (106a-106b) at the optical network unit (ONU) 104 are programmable by the SDN controller 112 via the optical line terminal (OLT) 116 through the ONU management control interface (OMCI) (not shown) to tune the upstream optical carrier to any wavelength within the upstream wavelength band (i.e., 1290nm-1330nm and 1270nm-1280nm for GPON and XGSPON, respectively) as prescribed by the ITU-T specification (G.984 and G.988). In particular, the (OMCI) (not shown) provides information exchange between OLT and the ONT.

Further, the wavelength selective switch 114 at the central office 100 which functions like a programmable wavelength router and can dynamically tune its output filter bandwidth (0.4/0.8 nm) to allow/block upstream carrier(s) of the ONU 104.

In accordance with an embodiment of the present disclosure, the system 100 may include the optical power splitter 108. In particular, the optic power splitter 108 is based on a quartz substrate of integrated waveguide optical power distribution devices. Moreover, the optic power splitter 108 is a passive device in the optical fibre link. Further, the optic power splitter 108 is an optical fibre tandem device with many input and output terminals in a passive optical network such as EPON, GPON, BPON, FTTX, FTTH, and the like.

In accordance with an embodiment of the present disclosure, the optical power splitter 108 includes but may not be limited to Fused Bi-conical Taper (FBT) splitter and Planar Light-wave Circuit (PLC) splitters. In particular, the Fused Bi-conical Taper is used in passive networks to achieve small split configurations such as 1x2, 1X4, 2x2, and the like. And, the Planar Light-wave Circuit splitters have waveguides fabricated using lithography onto a silica glass substrate that allows to route specific percentages of light.

In accordance with an embodiment of the present disclosure, the system 100 includes a central office 110 as a point of origin of passive optical networks. In particular, the optical fibre is supplied to the home or premises of a subscriber from the central office 110. Further, the central office 110 hosts the optical line terminals 116 and optical distribution frames (ODFs). Furthermore, the central office 110 provides necessary powering and includes some important components of a core network.

In accordance with alternate embodiment of the present disclosure, the central office 110 is the initial point of origination of the passive optical network. In particular, the central office 110 includes the SDN controller 112, the wavelength selective switch 114, and the optical line terminal 116.

In accordance with an embodiment of the present disclosure, the SDN controller 112 is operably configured to manage flow control for dynamic bandwidth management and application performance. In particular, the SDN controller 112 typically runs on a server and uses protocols to enable switches to send control layer packets. Moreover, the SDN controller 112 directs traffic according to forwarding policies that a network operator puts in place, thereby minimizing manual configurations for individual network devices. Furthermore, the SDN controller 112 serves as a sort of operating system (OS) for the network.

In accordance with an embodiment of the present disclosure, the dynamic bandwidth management system 120 includes software-defined networking controller 112, wavelength selective switch 114, optical network unit 104, and the optical line terminal 116. In particular, the wavelength selective switch 114 is connected to the optical line terminal 116 and the SDN controller 112 for data plane and control plane connectivity, respectively.

In accordance with alternate embodiment of the present disclosure, the dynamic bandwidth management system 120 is placed outside the software-defined networking controller 112.

In accordance with an embodiment of the present disclosure, the optical line terminal (OLT) 116 contains a plurality of equipment such as rack, CSM (Control and Switch Module), ELM (EPON Link Module, PON card), redundancy protection - 48V DC power supply modules or one 110/220V AC power supply module, and fans. Further, the optical line terminal 116 controls information float across Optical Distribution Network (ODN), going both directions. Moreover, the optical line terminal (OLT) 116 is located in the central office 110.

In accordance with an embodiment of the present disclosure, the optical line terminal (OLT) 116 has two float directions. In particular, the two float directions include upstream and downstream.

In accordance with an embodiment of the present disclosure, the wavelength selective switch 114 dynamically routes, blocks and attenuates DWDM (Dense Wavelength Division Multiplexer) or sub-DWDM wavelengths within the passive optical network. In particular, the wavelength selective switch 114 is a programmable wavelength router. Moreover, the wavelength selective switch 114 blocks or un-blocks a wavelength carrier at the output port. And, the wavelength selective switch 114 tunes output filter bandwidth to allow upstream carriers of the optical network unit 104.

In accordance with an embodiment of the present disclosure, the SDN controller 112 controls configuration of the wavelength selective switch 114. And, the optical network unit 104 is connected with the optical line terminal 116 through the wavelength selective switch 114. In particular, the wavelength selective switch 114 comprises an array of wavelength selective switches to form and support different configurations.

In accordance with an embodiment of the present disclosure, the SDN controller 112 groups the plurality of PON ports available at the optical line terminal 116. In particular, the SDN controller 112 allows the subscriber group 102 to switch on the plurality of PON ports to achieve required wavelength and bandwidth. Moreover, the plurality of PON ports include but may not be limited to broadband passive optical network (BPON), Ethernet passive optical network (EPON or GEPON) port, gigabit passive optical network (GPON or XGPON or XGSPON) port, and any other next-generation broadband PON technologies, (NGPON2). The Ethernet passive optical network (EPON or GEPON) port uses the Institute of Electrical and Electronics Engineers (IEEE) standards 802.3.

In accordance with alternate embodiment of the present disclosure, the central office 110 may include the fabric switch 118. In particular, the fabric switch 118 is a two layer network topology composed of leaf switches and spine switches connected by servers and storage. Moreover, the leaf switches aggregate traffic from server nodes and connects to the core of the network. Further, the leaf switches meshes into the spine switches forming an access layer that delivers network connection points for servers. Furthermore, the fabric switch 118 may reside inside or outside the Central Office, depending upon the network operator deployment scenario.

In accordance with an embodiment of the present disclosure, the dynamic bandwidth management system 120 determines start time and length of transmission time slot for the optical line terminal 116. In particular, the dynamic bandwidth management system 120 calculates bandwidth demand for logical queues at the optical line terminal 116 associated with specific quality of service (QoS) based on traffic and bandwidth information. Moreover, the dynamic bandwidth management system 120 schedules upstream traffic through construction of upstream bandwidth maps.

In accordance with an embodiment of the present disclosure, for a high bandwidth requirement service, such as AR or VR, the plurality of PON ports at the OLT may be able to combine partially or completely, in order to cater the high bandwidth requirements of the service.

In accordance with an embodiment of the present disclosure, for a low bandwidth requirement service, such as text messaging or email, a remaining available bandwidth at the connected PON port may be utilized by other services in the system.

According to this embodiment of the present disclosure, the dynamic bandwidth allocation (DBA) may be required to efficiently utilize limited resources (herein, PON ports) of network devices (herein, OLT) and cater the need of sudden change in the bandwidth requirements by users/subscribers. In this way, without dynamic bandwidth allocation, the bandwidth requirements of subscribers may be fulfilled by the hard wired or pre-mapped PON port, which leads to an inefficient resource utilization. Similarly, if the subscriber requires very less bandwidth, then the pre-mapped PON port may not be completely utilized, leading to an inefficient resource utilization. Thus, the interactive computing environment may and/or system 100 is able to combine partial or complete multiple PON ports of an OLT in order to cater the dynamic bandwidth requirements of the subscriber (or groups).

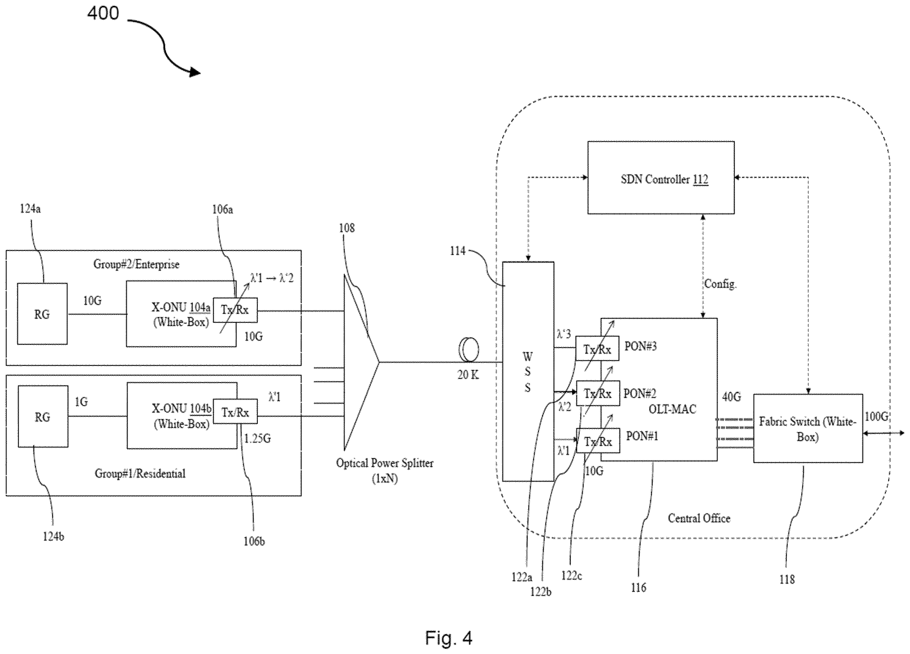

Referring to Fig. 4, Fig. 5, Fig. 6 and Fig. 7, passive optical network (PON) architecture 400, 500, 600 and 700 for dynamic bandwidth allocation are illustrated in accordance with one or more embodiments of the present disclosure. Various functions and operations of the subscriber group 102, the optical network unit 104, the tunable optical transceiver 106, the optic power splitter 108, the central office 110, the SDN controller 112, the wavelength selective switch 114, the optical line terminal 116, the fabric switch 118, and the dynamic bandwidth management system 120 are in connection/conjunction with the FIG. 3.

In accordance with an embodiment of the present disclosure, the central office 110 may include but not limited to an Open Network Operating System (ONOS). The Open Network Operating System (ONOS) may support the SDN controller 112 for building next-generation SDN/ Network function virtualization (NFV) solutions. In particular, the Open Network Operating System (ONOS) act as a platform and includes a set of applications that act as an extensible, modular, distributed SDN controller. Moreover, the Open Network Operating System (ONOS) may enable a simplified management, configuration and deployment of new software, hardware and services in the SDN controller 112. Further, the Open Network Operating System (ONOS) also supports both configuration and real-time control of the network, eliminating the need to run routing and switching control protocols inside a network fabric in the PONS.

By moving into the Open Network Operating System (ONOS), the various techniques may be enabled, and end-users may easily create new network applications without the need to alter a data plane system.

In accordance with an alternate embodiment of the present disclosure, the central office 110 may include a for a virtual OLT hardware abstraction component (vOLTHA). The vOLTHA may support the CORD Project objective of multi-vendor, multi-domain "any broadband access as a service" reference implementation for the Central Office 110. Further, the VOLTHA may provide isolation between an abstract (vendor agnostic) PON management system, and a set of vendor-specific and white-box PON hardware devices.

In accordance with another embodiment of the present disclosure, the central office 110 may include a service orchestrator. In particular, the service orchestrator arranges, sequences, and implements tasks based on rules and policies to coordinate the creation, modification, or removal of logical and physical resources in a service environment. Moreover, the service orchestrator provides orchestration at a very high level, with an end-to-end view of the infrastructure, network, and applications.

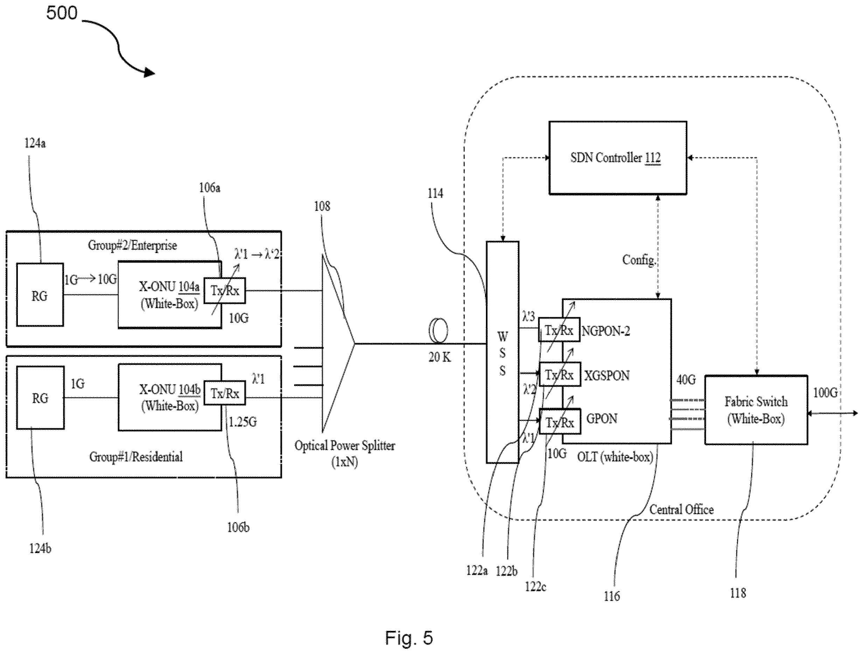

In an embodiment of the present disclosure, as illustrated in Fig. 5, the subscriber may seamlessly switch from the GPON to the XGS-PON or the NG-PON to the NG-PON2 subscription with programmable optical PON .

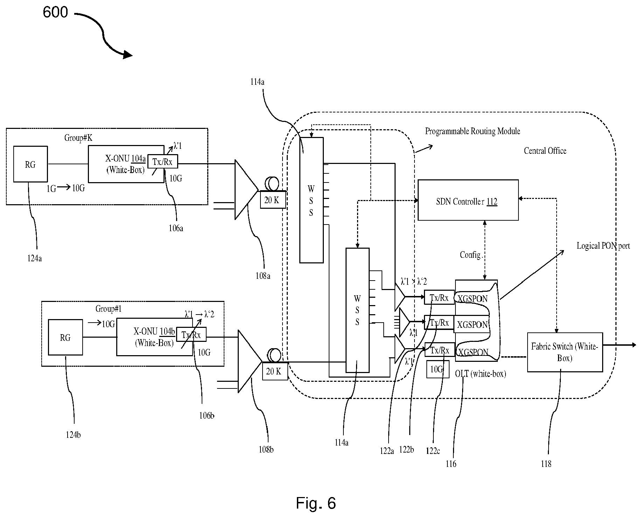

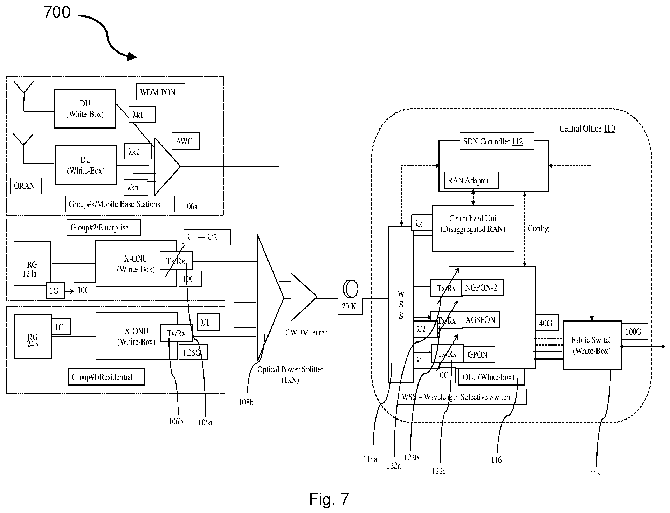

In an embodiment of the present disclosure, as illustrated in Fig. 6 and FIG. 7, two or more physical PON ports are grouped into one single logical PON port of higher capacity with the programmable PON. In particular, the type-B protection of the PON ports provides a backup protection against the failure of optical transceivers.

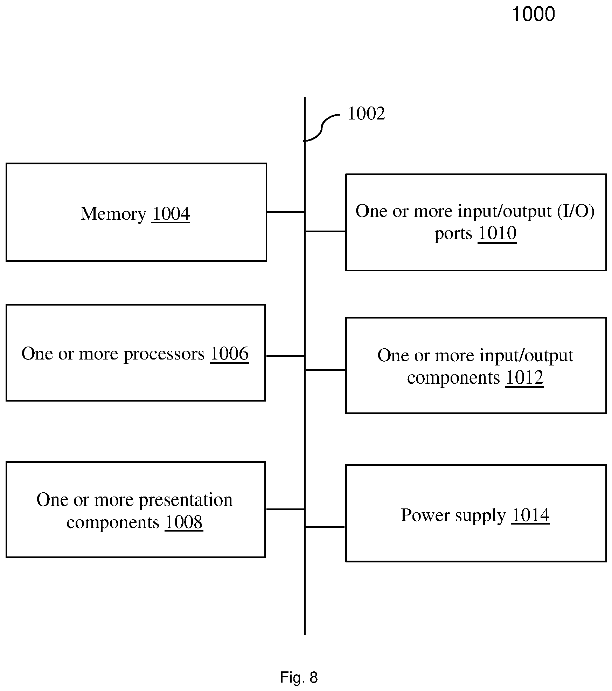

Referring to Fig. 8 is a schematic diagram, a computing device 1000 is illustrated. In particular, the computing device 1000 includes a bus 1002 that directly or indirectly couples memory 1004, one or more processors 1006, one or more presentation components 1008, one or more input/output (I/O) ports 1010, one or more input/output components 1012, and a power supply 1014. Moreover, the bus 1002 represents what may be one or more busses (such as an address bus, data bus, or combination thereof).

Although the various blocks of Fig. 8 are shown with lines for the sake of clarity, in reality, delineating various components is not so clear, and metaphorically, the lines would more accurately be grey and fuzzy. Fig. 8 is merely illustrative of an exemplary computing device 1000 that can be used in connection with one or more embodiments of the present disclosure. Distinction is not made between such categories as "workstation," "server," "laptop," "hand-held device," etc., as all are contemplated within the scope of FIG. 8 and reference to "computing device."

The computing device 1000 typically includes a variety of computer-readable media. The computer-readable media can be any available media that can be accessed by the computing device 1000 and includes both volatile and non-volatile media, removable and non-removable media. By way of example, and not limitation, the computer-readable media may comprise computer storage media and communication media. The computer storage media includes volatile and non-volatile, removable and non-removable media implemented in any method or technology for storage of information such as computer-readable instructions, data structures, program modules or other data.

In accordance with an embodiment of the present disclosure, the computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by the computing device 1000. The communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

The memory 1004 includes computer-storage media in the form of volatile and/or non-volatile memory. The memory 1004 may be removable, non-removable, or a combination thereof. Exemplary hardware devices include solid-state memory, hard drives, optical-disc drives, etc. The computing device 1000 includes one or more processors that read data from various entities such as memory 1004 or I/O components 1012. The one or more presentation components 308 present data indications to a user or other device. Exemplary presentation components include a display device, speaker, printing component, vibrating component, etc.

The one or more I/O ports 1010 allow the computing device 1000 to be logically coupled to other devices including the one or more I/O components 1012, some of which may be built in. Illustrative components include a microphone, joystick, gamepad, satellite dish, scanner, printer, wireless device, etc.

In an exemplary example, the presentation component may be a display device which is an I/O component.

### Principle of the method:

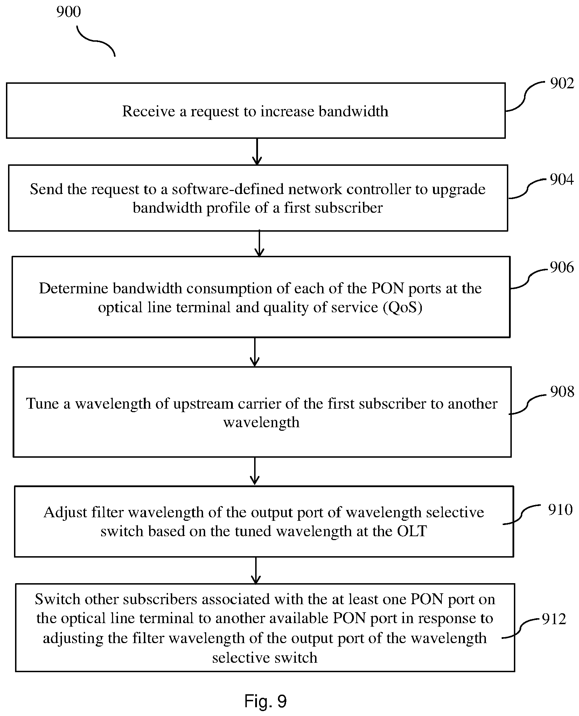

A schematic outline of the method for enabling dynamic bandwidth control in the passive optical network is given in Fig. 9. It may be noted that in order to explain the method steps of the flowchart 900, references will be made to the elements explained in FIGs. 3-7. And, the steps 902-912 of method 900 are performed by the dynamic bandwidth management system (120).

The method 900 starts at step 902. At step 902, a request to adjust the bandwidth from a subscriber among the subscriber group 102 is received. In particular, the request requirements from at least one subscriber among the subscriber group 102 includes, but not limited to, increasing the bandwidth (scaling up) or decreasing the bandwidth (scaling down).

Step 902 proceeds to step 904. At step 904, the request to adjust the bandwidth profile of the subscriber among the plurality of groups 102 is sent to the SDN controller 112 .

Step 904 proceeds to step 906. At step 906, a determination is made for the bandwidth usage of each of the PON port 122a-122c at an optical line terminal 116 and a QoS of other subscribers among the plurality of groups 102.

Step 906 proceeds to step 908. At 908, the method includes tuning a wavelength of the upstream carrier of the subscriber to another wavelength. Another wavelength is associated with the available PON port and logically grouped with a current PON port.

Step 908 proceeds to step 910. At 910, the filter wavelength of an output port of a wavelength selective switch is adjusted based on the tuned wavelength at the OLT.

Step 910 proceeds to step 912. At 912, the other subscribers associated with the at least one PON port on the optical line terminal 116 are switched to another available PON port to adjust the filter wavelength of the output port of the wavelength selective switch 114. Thus, the first subscriber from the first PON port is switched to the second PON port at the optical line terminal (OLT), when the first bandwidth availability at the first PON port is less than a predefined bandwidth and the second bandwidth availability at the second PON port is more than the predefined bandwidth. In particular, the predefined bandwidth is a required bandwidth by the first subscriber.

It may be noted that the flowchart 900 is explained to have above stated process steps; however, those skilled in the art would appreciate that the flowchart 900 may have more/less number of process steps which may enable all the above stated embodiments of the present disclosure.

Overall, the present disclosure provides a system and a method of dynamic bandwidth allocation in the passive optical network. The system and method as described herein specifically depicts advantages such as increased scale and capacity of passive optical network infrastructure without duplication of hardware resources, enabling dynamic and isolated re-use of capacity allocation of passive optical network infrastructure, providing a multi-tenancy system, supporting 1:N Type-B passive optical network port protection and scaling the upstream bandwidth beyond PON port speed.

A person of ordinary skill in the art may be aware that, in combination with the examples described in the embodiments disclosed in this specification, units and algorithm steps may be implemented by electronic hardware, computer software, or a combination thereof.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

While several possible embodiments of the disclosure have been described above and illustrated in some cases, it should be interpreted and understood as to have been presented only by way of illustration and example, but not by limitation. Thus, the breadth and scope of a preferred embodiment should not be limited by any of the above-described exemplary embodiments.

It will be apparent to those skilled in the art that other embodiments of the invention will be apparent to those skilled in the art from consideration of the specification and practice of the invention. While the foregoing written description of the invention enables one of ordinary skill to make and use what is considered presently to be the best mode thereof, those of ordinary skill will understand and appreciate the existence of variations, combinations, and equivalents of the specific embodiment, method, and examples herein. The invention should therefore not be limited by the above described embodiment, method, and examples, but by all embodiments and methods within the scope of the invention. It is intended that the specification and examples be considered as exemplary, with the true scope of the invention being indicated by the claims.

The methods and processes described herein may have fewer or additional steps or states and the steps or states may be performed in a different order. Not all steps or states need to be reached. The methods and processes described herein may be embodied in, and fully or partially automated via, software code modules executed by one or more general purpose computers. The code modules may be stored in any type of computer-readable medium or other computer storage device. Some or all of the methods may alternatively be embodied in whole or in part in specialized computer hardware.

The results of the disclosed methods may be stored in any type of computer data repository, such as relational databases and flat file systems that use volatile and/or non-volatile memory (e.g., magnetic disk storage, optical storage, EEPROM and/or solid state RAM)

The various illustrative logical blocks, modules, routines, and algorithm steps described in connection with the embodiments disclosed herein can be implemented as electronic hardware, computer software, or combinations of both. To clearly illustrate this interchangeability of hardware and software, various illustrative components, blocks, modules, and steps have been described above generally in terms of their functionality. Whether such functionality is implemented as hardware or software depends upon the particular application and design constraints imposed on the overall system. The described functionality can be implemented in varying ways for each particular application, but such implementation decisions should not be interpreted as causing a departure from the scope of the disclosure.

Moreover, the various illustrative logical blocks and modules described in connection with the embodiments disclosed herein can be implemented or performed by a machine, such as a general purpose processor device, a digital signal processor (DSP), an application specific integrated circuit (ASIC), a field programmable gate array (FPGA) or other programmable logic device, discrete gate or transistor logic, discrete hardware components or any combination thereof designed to perform the functions described herein. A general purpose processor device can be a microprocessor, but in the alternative, the processor device can be a controller, microcontroller, or state machine, combinations of the same, or the like. A processor device can include electrical circuitry configured to process computer-executable instructions. In another embodiment, a processor device includes an FPGA or other programmable device that performs logic operations without processing computer-executable instructions. A processor device can also be implemented as a combination of computing devices, e.g., a combination of a DSP and a microprocessor, a plurality of microprocessors, one or more microprocessors in conjunction with a DSP core, or any other such configuration. Although described herein primarily with respect to digital technology, a processor device may also include primarily analog components.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

In a case that no conflict occurs, the embodiments in the present invention and the features in the embodiments may be mutually combined.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A system (100) of dynamic bandwidth allocation in the passive optical network, wherein the system (100) comprises a subscriber group (102), an optical network unit (ONU) (104), a software-defined network (SDN) controller (112) and an optical line terminal (OLT) (116),
wherein the SDN controller (112) is operably configured to:
switch a first subscriber of the subscriber group (102) from a first passive optical network (PON) port to a second PON port at the OLT (116) when a first bandwidth availability at the first PON port is less than a predefined bandwidth and a second bandwidth availability at the second PON port is more than the predefined bandwidth, wherein the predefined bandwidth is a required bandwidth by the first subscriber.

2. The system (100) as claimed in claim 1, wherein the SDN controller (112) is configured to receive a request from the first subscriber for the predefined bandwidth allocation.

3. The system (100) as claimed in claim 1 or claim 2, wherein the SDN controller (112) is configured to allocate the predefined bandwidth to the first subscriber, by the second PON port, when the first bandwidth availability at the first PON port is less than the predefined bandwidth, required by the first subscriber.

4. The system (100) as claimed in any preceding claim, wherein the SDN controller (112) is operably configured to:
check a bandwidth availability at a plurality of PON ports associated with the OLT (116);
select a sub-plurality of PON ports where bandwidth availability is more than the predefined bandwidth; and
select the second PON port from the sub-plurality of PON ports for switching the first subscriber from the first PON port to the second PON port.

5. The system (100) as claimed in any preceding claim, wherein the SDN controller (112) allocates the predefined bandwidth to the first subscriber, by the second PON port, when the first bandwidth availability at the first PON port is less than the predefined bandwidth, and a second bandwidth availability at the second PON port is more than the predefined bandwidth, wherein the allocation of the predefined bandwidth further comprising allocating a portion of the second bandwidth availability to the first subscriber.

6. The system (100) as claimed in any preceding claim, wherein the switching of the first subscriber from the first PON port to the second PON port at the OLT (116) comprises changing a first wavelength of upstream carrier of the first subscriber to a second wavelength at the ONU (104) associated with the first subscriber, wherein the second wavelength is associated with the second PON port.

7. The system (100) as claimed in claim 6, wherein the switching of the first subscriber from the first PON port to the second PON port at the OLT (116) further comprises:
tuning a filter wavelength of an output port of a wavelength selective switch (114) catering to the OLT, in accordance to the changed first wavelength of upstream carrier of the first subscriber, at the ONU; and
switching the first subscriber associated with the first PON port to the second PON port, in response to tuning the filter wavelength of the output port of the wavelength selective switch (114).

8. A method for dynamic bandwidth allocation in a passive optical network, wherein the method comprising:
switching, by a software-defined network controller (112), a first subscriber from a first passive optical network (PON) port to a second PON port at an optical line terminal (OLT) (116) when a first bandwidth availability at the first PON port is less than a predefined bandwidth and a second bandwidth availability at the second PON port is more than the predefined bandwidth, and wherein the predefined bandwidth is a required bandwidth by the first subscriber.

9. The method as claimed in claim 8, wherein the method further comprises a step of receiving a request from the first subscriber for the predefined bandwidth allocation.

10. The method as claimed in claim 8 or claim 9, wherein the method further comprises a step of allocating the predefined bandwidth to the first subscriber, by the second PON port, when the first bandwidth availability at the first PON port is less than the predefined bandwidth, required by the first subscriber.

11. The method as claimed in any one of claims 8 to 10, wherein the method further comprising steps of:
checking a bandwidth availability at a plurality of PON ports associated with the OLT;
selecting a sub-plurality of PON ports where bandwidth availability is more than the predefined bandwidth; and
selecting the second PON port from the sub-plurality of PON ports for switching the first subscriber from the first PON port to the second PON port.

12. The method as claimed any one of claims 8 to 11, wherein the method further comprising
allocating the predefined bandwidth to the first subscriber, by the second PON port, when the first bandwidth availability at the first PON port is less than the predefined bandwidth, and a second bandwidth availability at the second PON port is more than the predefined bandwidth,
wherein the allocation of the predefined bandwidth further comprising allocating a portion of the second bandwidth availability to the first subscriber.

13. The method as claimed in any one of claims 8 to 12, wherein the switching of the first subscriber from the first PON port to the second PON port at the optical line terminal (OLT) further comprises
changing a first wavelength of upstream carrier of the first subscriber to a second wavelength at an optical network unit (ONU) (104) associated with the first subscriber,
wherein the second wavelength is associated with the second PON port.

14. The method as claimed in claim 13, wherein the switching of the first subscriber from the first PON port to the second PON port at the optical line terminal (OLT) further comprises:
tuning a filter wavelength of an output port of a wavelength selective switch (114) catering to the OLT, in accordance to the changed first wavelength of upstream carrier of the first subscriber, at the ONU; and
switching the first subscriber associated with the first PON port to the second PON port, in response to tuning the filter wavelength of the output port of the wavelength selective switch (114).
